**Europäisches Patentamt**

**European Patent Office**

**Office européen des brevets**

(19)

(11) Veröffentlichungsnummer : **0 190 371
B1**

(12) # EUROPÄISCHE PATENTSCHRIFT

(45) Veröffentlichungstag der Patentschrift :
26.04.89

(21) Anmeldenummer : 84710027.8

(22) Anmeldetag : 20.08.84

(51) Int. Cl.⁴ : **A 23 L   1/236**

(54) **Trockene, rieselfähige und leichtlösliche Süsstoffzubereitung, sowie Verfahren zu ihrer Herstellung.**

(30) Priorität : 18.08.83 DE 3329764

(43) Veröffentlichungstag der Anmeldung :
13.08.86 Patentblatt 86/33

(45) Bekanntmachung des Hinweises auf die Patenterteilung : 26.04.89 Patentblatt 89/17

(84) Benannte Vertragsstaaten :
AT BE CH DE FR GB IT LI LU NL SE

(56) Entgegenhaltungen :
FR–A– 2 320 703
GB–A– 1 470 603
GB–A– 2 066 042

(73) Patentinhaber : Krüger GmbH & Co. KG
Meisenweg 2 Postfach 20 05 29
D-5060 Bergisch Gladbach 2 (DE)

(72) Erfinder : Krüger, Willibert
Meisenweg 2
D-5060 Bergisch Gladbach 2 (DE)

(74) Vertreter : Werner, Hans-Karsten, Dr. et al
Deichmannhaus am Hauptbahnhof
D-5000 Köln 1 (DE)

## Beschreibung

Gegenstand der vorliegenden Erfindung sind trockene, rieselfähige und leichtlösliche Süßstoffzubereitungen, enthaltend einen Träger und ein Gemisch. aus Saccharin und Cyclamat mit einer Schüttdichte von weniger als 0,2 g/cm³.

Süßstoffzubereitungen, enthaltend ein Gemisch aus Saccharin und Cyclamat, sind bereits bekannt. So. werden in einigen Ländern Gemische im Verhältnis von etwa 10 : 1, in anderen Ländern Gemische von 5 : 1 empfohlen und vertrieben. Ein Produkt im Verhältnis von etwa 9 : 1, welches etwa 8 Gewichtsteile des Süßstoffgemisches und 92 Gewichtsteile eines Trägers enthielt, war im Handel ; vgl. grüne Liste 1977, Editio Cantor Aulendorf Seite 103/104. Dieses Gemisch hatte etwa die 10-fache Süßkraft pro Gewichtseinheit wie Saccharose. Die Schüttdichte dieses Produktes war der der Saccharose vergleichbar, so daß man volumenmäßig etwa 1/10 der Menge verwenden mußte, um eine vergleichbare Süßung wie mit Saccharose zu erreichen. Inzwischen ist dieses Produkt in neuer Form auf den Markt gekommen, wobei als Träger 85,6 % Maltodextrin verwendet wird. Dieses Produkt ist offensichtlich unter Aufblähung sprühgetrocknet und weist eine Schüttdichte von ca. 0,1 g/cm³ auf. Dieses Produkt weist zwar den Vorteil auf, etwa die gleiche Süßungskraft pro Schüttvolumen zu haben wie Saccharose, so daß es sich beim Gebrauch in ähnlich einfacher Weise dosieren läßt. Der Nachteil dieses Produktes ist jedoch, daß durch den hohen Anteil an Maltodextrin das Produkt noch immer kariogen ist und für den Diabetiker anrechenbare Broteinheiten enthält.

Aus der GB-A-2 066 042 ist die Verwendung von Gelatine als Träger von genießbaren Süßstoffzubereitungen bekannt. Diesen, vorzugsweise Saccharin enthaltenden Süßstoffzubereitungen muß allerdings noch ein proteolytisches Enzym, wie Papain, hinzugefügt werden, um erfindungsgemäß eine trinkbare Zubereitung zu erhalten.

Die Erfindung hat sich die Aufgabe gestellt, eine trockene, rieselfähige und leichtlösliche Süßstoffzubereitung, enthaltend einen Träger und ein Gemisch aus Saccharin und Cyclamat mit einer Schüttdichte von weniger als 0,2 g/cm³ zu entwickeln, welche kohlehydratfrei und kalorienarm ist und dabei in der Praxis so leicht zu dosieren ist wie Saccharose.

Diese Aufgabe kann überraschenderweise dadurch gelöst werden, daß man als Träger ein in Wasser dispergierbares und/oder lösliches Protein verwendet, welches zusanmen mit dem Süßstoff sprühgetrocknet überwiegend in Form von hohlen Teilchen vorliegt.

Vorzugsweise wird als Träger ein in Wasser lösliches Protein verwendet, da dieses sich bei der Verwendung wie Saccharose verhält und zu klaren Lösungen führt. Bei Verwendungsarten, bei denen eine gewisse Trübung nicht stören würde, nämlich für an sich trübe Getränke und Speisen sowie in Fällen, wo das Süßungsmittel nur auf die Speisen aufgestreut wird, kann man auch ohne weiteres Protein verwenden, welches in Wasser nur dispergierbar ist. Erfindungsgemäß besonders geeignet sind in Wasser klar lösliche kurzkettige Proteine aus Bindegewebe. Es können aber auch wasserlösliche Proteine aus Weizen, Mais oder Soja eingesetzt werden. Entscheidend für alle erfindungsgemäß einsetzbaren Proteine ist, daß sie zusammen mit dem Süßstoff und Wasser beim Sprühtrocknen einen Film bilden, aus dem sich dann hohle Teilchen mit niederer Schüttdichte bilden können. Erfindungsgemäß soll die Schüttdichte unter 0,2 g/cm³ liegen. Es ist prinzipiell möglich, Schüttdichten von 0,09 g/cm³ zu erreichen. Die hohlen Teilchen sind dann allerdings so dünnwandig, daß sie bei mechnischer Beanspruchung leichter zerstört werden und in weniger rieselfähiges Feinkorn zerfallen. Erfindungsgemäß werden daher Schüttdichten der hohlen Teilchen von 0,09 bis 0,2 g/cm³, vorzugsweise 0,10 bis 0,15 g/cm³ erzielt. Die erfindungsgemäß niedrigen Schüttdichten der Süßstoffzubereitungen führen dazu, die übliche Dosierung von Süßungsmitteln, beispielsweise mit einem Teelöffel, zu erleichtern. Erfindungsgemäß ist es insbesondere möglich, Zubereitungen herzustellen, die die gleiche oder nur geringfügig höhere Süßungskraft pro Schüttvolumen aufweisen wie Saccharose.

Bei Verwendung des üblichen Gemisches von Cyclamat und Saccharin im Verhältnis von etwa 10 : 1 ist es möglich,. etwa die gleiche Süßungskraft pro Schüttvolumen zu erreichen, wenn man Mischungen von 6 bis 11 Gew.-% Süßstoffgemisch mit 89 bis 94 Gewichtsteilen wasserlösliches Protein zu Produkten verarbeitet, die eine Schüttdichte von 0,11 bis 0,15 g/cm³ aufweisen. Diese Produkte sind mechanisch noch stabil genug, in Gläsern abgefüllt und transportiert zu werden. Aus solchen Gläsern oder ähnlichen Gefäßen kann man dann beispielsweise mit einem Teelöffel die gleiche Süßungskraft· pro Schüttvolumen entnehmen wie bei Saccharose. Ein derartiges erfindungsgemäßes Produkt ist nicht nur leicht handhabbar sondern erleichtert es auch den Anwendern, die Süßstoffzubereitung im Beisein von Mitmenschen zu verwenden, die in gewohnter Weise mit Saccharose süßen wollen oder dürfen.

Die erfindungsgemäßen Süßstoffzubereitungen entsprechen bezüglich Rieselfähigkeit, Leichtlöslichkeit und Stabilität allen Anforderungen an ein derartiges Produkt. Sie sind auch — im Gegensatz zu dem jetzt im Handel befindlichen Produkt auf Basis von Maltodextrin als Träger — nicht hygroskopisch, so daß es nicht zu nachträglichen Verklebungen und Erhöhung der Schüttdichte kommt.

Gegenstand der vorliegenden Erfindung ist weiterhin ein Verfahren zur Herstellung dieser trockenen, rieselfähigen und leichtlöslichen Süßstoffzubereitungen, enthaltend einen Träger und ein Gemisch aus Saccharin und Cyclamat mit einer Schüttdichte von weniger als 0,2 g/cm$^3$, das dadurch gekennzeichnet ist, daß man ein Gemisch aus 80 bis 97 Gew.-% Träger und 3 bis 20 Gew.-% Süßstoff zu hohlen Teilchen sprühtrocknet. Besonders bevorzugt ist ein Verfahren, bei dem die wässrige Lösung von 4 bis 16 Gewichtsteilen eines Gemisches aus Cyclamat und Saccharin im Verhältnis von etwa 10 : 1 mit 84 bis 96 Gewichtsteilen eines im Wasser klarlöslichen kurzkettigen Proteins aus Bindegewebe zu hohlen Teilchen einer Schüttdichte von 0,1 bis 0,15 g/cm$^3$ sprühtrocknet.

In den nachfolgenden Beispielen sind die erfindungsgemäße Süßstoffzubereitung und das Verfahren zu ihrer Herstellung näher erläutert.

Beispiel 1

92 Gewichtsteile kurzkettiges Protein (KK-Protein « F », hergestellt von der B. P. F., Biologisch-Physikalische Forschungsgesellschaft mbH, Frankfurt) wurden mit 8 Gewichtsteilen eines Süßstoffgemisches aus Cyclamat und Saccharin jeweils in Form der Natriumsalze (Gewichtsverhältnis 10 : 1) mit 200 Gewichtsteilen Wasser klar gelöst und zu hohlen Teilchen mit einem Schüttgewicht von 0,12 g/cm$^3$ sprühgetrocknet. Das Produkt weist eine Süßungskraft pro Schüttvolumen auf, die etwa der der Saccharose entspricht. Das Produkt ist stabil, rieselfähig und nicht hygroskopisch. Es enthält weiterhin keine Kohlehydrate und nur äußerst geringen Nährwert.

Beispiel 2

Das Beispiel 1 wurde wiederholt unter Verwendung eines kurzkettigen Proteins aus Bindegewebe, welches von einem anderen Hersteller stammt, sich jedoch ebenfalls in gleicher Weise gut verarbeiten ließ. Das so erhaltne Produkt entsprach in seinen Eigenschaften völlig denen des Beispiels 1.

**Patentansprüche**

1. Trockene, rieselfähige und leichtlösliche Süßstoffzubereitung, enthaltend einen Träger und ein Gemisch aus Saccharin und Cyclamat mit einer Schüttdichte von weniger als 0,2 g/cm$^3$, dadurch gekennzeichnet, daß der Träger ein in Wasser dispergierbares und/oder lösliches Protein ist, welches überwiegend in Form von sprühgetrockneten hohlen Teilchen vorliegt.

2. Süßstoffzubereitung gemäß Anspruch 1, dadurch gekennzeichnet, daß der Träger ein in Wasser lösliches Protein ist.

3. Süßstoffzubereitung gemäß Anspruch 1 oder 2, dadurch gekennzeichnet, daß der Träger ein in Wasser klar lösliches kurzkettiges Protein aus Bindegewebe ist.

4. Süßstoffzubereitung gemäß einem der Ansprüche 1 bis 3, dadurch gekennzeichnet, daß sie 80 bis 97 Gew.-% Träger enthält.

5. Verfahren zur Herstellung von trockenen, rieselfähigen und leichtlöslichen Süßstoffzubereitungen, enthaltend einen Träger und ein Gemisch aus Saccharin und Cyclamat mit einer Schüttdichte von weniger als 0,2 g/cm$^3$, dadurch gekennzeichnet, daß man ein Gemisch aus 80 bis 97 Gew.-% eines in Wasser dispergierbaren und/oder löslichen Proteins und 3 bis 20 Gew.-% Süßstoffgemisch zu hohlen Teilchen mit einer Schüttdichte von weniger als 0,2 g/cm$^3$ sprühtrocknet.

6. Verfahren gemäß Anspruch 5, dadurch gekennzeichnet, daß man die wässrige Lösung von 4 bis 16 Gewichtsteilen eines Gemisches aus Cyclamat und Saccharin mit 84 bis 96 Gewichtsteilen eines in Wasser klar löslichen kurzkettigen Proteins aus Bindegewebe zu hohlen Teilchen einer Schüttdichte von 0,1 bis 0,15 g/cm$^3$ sprühtrocknet.

**Claims**

1. A dry flowable and readily soluble sweetener preparation, containing a carrier and a mixture comprising saccharin and cyclamate, having a bulk density of less than 0.2 g/cm$^3$, characterized in that the carrier is a water-dispersible and/or water-soluble protein which is predominantly present in the form of spray-dried hollow particles.

2. The sweetener preparation according to claim 1, characterized in that the carrier is a water-soluble protein.

3. The sweetener preparation according to claim 1 or 2, characterized in that the carrier is a short-chain protein from connective tissue which is water-soluble to form a clear solution.

4. The sweetener preparation according to anyone of claims 1 to 3, characterized in that it contains from 80 to 97 % by weight of carrier.

5. A process for preparing dry flowable and readily soluble sweetener preparations, containing a carrier and a mixture comprising saccharin and cyclamate, having a bulk density of less than 0.2 g/cm$^3$, characterized in that a mixture comprising from 80 to 97 % by weight of a water-dispersible and/or watersoluble protein and from 3 to 20 % by weight of sweetener mixture is spray-dried to form hollow particles having a bulk density of less than 0.2 g/cm$^3$.

6. The process according to claim 5, characterized in that the aqueous solution of from 4 to 16 parts by weight of a mixture comprising cyclamate und saccharin with 84 to 96 parts by weight of a short-chain protein from connective tissue which is water-soluble to form a clear solution is spray-dried to form hollow particles having a bulk density of from 0.1 to 0.15 g/cm$^3$.

**Revendications**

1. Préparation de matière édulcorante sèche, dispersible et facilement soluble, comprenant un support et un mélange de saccharine et de cyclamate, avec une masse volumique apparente inférieure à 0,2 g/cm$^3$, caractérisée en ce que le support est une protéine dispersible et/ou soluble dans l'eau, qui se présente essentiellement sous la forme de particules creuses, séchées par atomisation.

2. Préparation de matière édulcorante selon la revendication 1, caractérisée en ce que le support est une protéine soluble dans l'eau.

3. Préparation de matière édulcorante selon la revendication 1 ou 2, caractérisée en ce que le support est une protéine à chaîne courte, donnant une solution transparente dans l'eau et provenant de tissu conjonctif.

4. Préparation de matière édulcorante selon l'une des revendications 1 à 3, caractérisée en ce qu'elle contient 80 à 97 % en poids de support.

5. Procédé pour l'obtention de préparations de matière édulcorante sèche, dispersible et facilement soluble, comprenant un support et un mélange de saccharine et de cyclamate, avec une masse volumique apparente inférieure à 0,2 g/cm$^3$, caractérisé en ce qu'on sèche par atomisation un mélange de 80 à 97 % en poids d'une protéine dispersible et/ou soluble dans l'eau et 3 à 20 % en poids d'un mélange de substances édulcorantes pour obtenir des particules creuses ayant une masse volumique apparente inférieure à 0,2 g/cm$^3$.

6. Procédé selon la revendication 5, caractérisé en ce qu'on sèche par atomisation la solution aqueuse de 4 à 16 parties en poids d'un mélange de cyclamate et de saccharine avec 84 à 96 parties en poids d'une protéine à chaîne courte, donnant une solution transparente dans l'eau et provenant de tissu conjonctif, pour obtenir des particules creuses ayant une masse volumique apparente de 0,1 à 0,15 g/cm$^3$.